# EUROPÄISCHE PATENTANMELDUNG

(11) **EP 4 790 453 A1**
(43) Veröffentlichungstag der Anmeldung: **12.08.2026**
(21) Anmeldenummer: 25156454.8
(22) Anmeldetag: 07.02.2025
(51) Int. Cl.: G01S 7/4865, G01S 7/486, G01S 7/497, G01S 17/10, G01S 17/89

(54) **VERFAHREN ZUM BETREIBEN EINES OPTISCHEN LAUFZEITSENSORS, OPTISCHER LAUFZEITSENSOR UND COMPUTERPROGRAMMPRODUKT**

(71) Anmelder: SICK AG, 79183 Waldkirch (DE)
(72) Erfinder: Erdmann, Jennifer, 22969 Witzhave (DE); Schneider, Georg, 20535 Hamburg (DE); Diebel, Falko, 22175 Hamburg (DE)
(74) Vertreter: Manitz Finsterwald Patent- und Rechtsanwaltspartnerschaft mbB

(57) **Zusammenfassung**

In einer Ausführungsform weist ein Verfahren zum Betreiben eines optischen Laufzeitsensors folgende Schritte auf: Ermitteln eines Eingabeintensitätsbildes mit dem optischen Laufzeitsensor, wobei das Eingabeintensitätsbild mindestens einen Datenpunkt, insbesondere mehrere Datenpunkte, aufweist, welchem, insbesondere welchen jeweils, zumindest ein Eingabeintensitätswert und ein Eingabepulsbreitenwert zugeordnet ist, wobei der Eingabeintensitätswert und der Eingabepulsbreitenwert jeweils aus einem Echosignal bestimmt wird, welches von dem Laufzeitsensor nach Aussenden eines Sendesignals und dessen Remission an einer Szene detektiert wird; Überprüfen für mindestens einen Datenpunkt des Eingabeintensitätsbildes, ob sein Eingabeintensitätswert gleich oder größer als ein vordefinierter erster Schwellwert ist, falls ja, Ermitteln eines Ausgabeintensitätswerts für den mindestens einen Datenpunkt, wobei der Ausgabeintensitätswert eine Funktion des Eingabeintensitätswerts und des Eingabepulsbreitenwerts ist oder wobei der Ausgabeintensitätswert nur eine Funktion des Eingabepulsbreitenwerts ist; und Bereitstellen eines Ausgabeintensitätsbildes mit dem mindestens einen Datenpunkt mit dem Ausgabeintensitätswert.

## Beschreibung

Die vorliegende Erfindung betrifft ein Verfahren zum Betreiben eines optischen Laufzeitsensors, einen optischen Laufzeitsensor und ein Computerprogrammprodukt.

Laufzeitsensoren werden dazu eingesetzt, in einem Überwachungsbereich des Sensors Distanzmessungen durchzuführen. Bei einem optischen Laufzeitsensor werden hierfür optische Signale verwendet. Eine Laufzeit zwischen Aussenden und Empfangen eines derartigen optischen Signals bzw. Lichtsignals wird durch Messung ermittelt. Hierzu sendet der Laufzeitsensor, beispielsweise ein sogenannter Lidarsensor (Englisch: Light Detection and Ranging) ein Signal, beispielsweise in Form eines gepulsten Lasersignals, aus, welches von Objekten im Überwachungsbereich remittiert bzw. reflektiert wird. Die in Form eines Echosignals remittierten Pulse werden von dem Sensor detektiert. Auf Basis dieses Echosignals bestimmt der Sensor die Laufzeit (Englisch: Time of Flight) der Lichtpulse von dem Sensor zu dem Objekt bzw. den Objekten im Überwachungsbereich und zurück und errechnet daraus den Abstand oder die Entfernung des Objekts/der Objekte vom Sensor. Der Sensor führt dies beispielsweise für eine Vielzahl von Bildpunkten durch und erstellt so ein Distanzbild einer im Überwachungsbereich befindlichen Szene.

Das Distanzbild gibt folglich Aufschluss über die Entfernung einzelner Elemente oder Objekte einer Szene im Überwachungsbereich. Die Elemente oder Objekte werden üblicherweise als Targets bezeichnet. Ein optischer Laufzeitsensor erfasst zusätzlich die Stärke, also die Intensität des jeweils von den Targets remittierten Lichts und stellt diese Information in einem Intensitätsbild dar. Die Intensität hängt von verschiedenen Faktoren ab, beispielsweise von einer Reflexionsfähigkeit von Oberflächen in der Szene, dem Einfallswinkel des Sendelichtstrahls und der Wellenlänge des verwendeten Lichts. Die Reflexionsfähigkeit einer Oberfläche hängt beispielsweise von ihrem Material oder ihrer Textur ab. Entsprechend kann es vorkommen, dass beispielsweise im Nahbereich des Sensors oder falls die Szene besonders reflektive Objekte enthält, Intensitätswerte des so erstellten Intensitätsbildes in die Sättigung geraten. Dies bedeutet, dass der Sensor eine Intensität, welche oberhalb der Sättigungsgrenze der in dem Sensor verwendeten Detektorelemente liegt, nicht detektieren kann, weshalb auch für Intensitäten oberhalb der Sättigungsgrenze jeweils lediglich der Maximalwert der Intensität in undifferenzierter Form angezeigt wird. Dadurch geht die Information der tatsächlich empfangenen optischen Leistung verloren.

Eine Aufgabe besteht folglich darin, ein Verfahren zum Betreiben eines optischen Laufzeitsensors sowie einen optischen Laufzeitsensor anzugeben, welche ein demgegenüber verbessertes Intensitätsbild bereitstellen.

Die Aufgabe wird gelöst mit den Gegenständen der unabhängigen Patentansprüche. Weiterbildungen und Ausgestaltung der Erfindung sind jeweils Gegenstand der abhängigen Patentansprüche.

In einer Ausführungsform weist ein Verfahren zum Betreiben eines optischen Laufzeitsensors folgende Schritte auf:
Ermitteln eines Eingabeintensitätsbildes mit dem optischen Laufzeitsensor, wobei das Eingabeintensitätsbild mindestens einen Datenpunkt, insbesondere mehrere Datenpunkte, aufweist, dem, insbesondere denen jeweils, zumindest ein Eingabeintensitätswert und Eingabepulsbreitenwert zugeordnet ist, wobei der Eingabeintensitätswert und der Eingabepulsbreitenwert jeweils aus einem Echosignal bestimmt werden, welches von dem Laufzeitsensor nach Aussenden eines Sendesignals und dessen Remission an einer Szene detektiert wird,
Überprüfen für mindestens einen Datenpunkt des Eingabeintensitätsbildes, ob sein Eingabeintensitätswert einen vordefinierten ersten Schwellwert erreicht oder übersteigt, falls ja, Ermitteln eines Ausgabeintensitätswerts für den mindestens einen Datenpunkt, wobei der Ausgabeintensitätswert eine Funktion des Eingabeintensitätswerts und des Eingabepulsbreitenwerts ist oder wobei der Ausgabeintensitätswert nur eine Funktion des Eingabepulsbreitenwerts ist, und
Bereitstellen eines Ausgabeintensitätsbildes mit dem mindestens einen Datenpunkt mit dem Ausgabeintensitätswert.

Das erfindungsgemäße Verfahren nimmt nach dem Erstellen des Eingabeintensitätsbildes, welches auf Basis des von dem Laufzeitsensor detektierten Echosignals erstellt wurde, eine Überprüfung mindestens eines Datenpunkts dieses Eingabeintensitätsbildes vor. Liegt dessen Eingabeintensitätswert oberhalb des ersten Schwellwerts, wird der Eingabeintensitätswert unter Verwendung des Eingabepulsbreitenwerts reskaliert und so der Ausgabeintensitätswert erzeugt. Das Ausgabeintensitätsbild wird entsprechend bereitgestellt. Beispielsweise werden hierfür die Datenpunkte des Eingabeintensitätsbildes mit ihren zugehörigen Eingabeintensitätswerten, sofern diese unterhalb des ersten Schwellwerts liegen, verwendet und der mindestens einem Datenpunkt, dessen Intensitätswert mit dem erfindungsgemäßen Verfahren reskaliert wurde.

Die vorliegende Erfindung geht aus von der Beobachtung, dass Intensitätswerte der von einem optischen Laufzeitsensor detektierten Echosignale im Nahbereich oder bei hochreflektierenden Oberflächen im Überwachungsbereich in die Sättigung geraten können. Der erste Schwellwert wird folglich entsprechend einer Sättigungsgrenze des jeweiligen optischen Laufzeitsensors vordefiniert. Erfindungsgemäß wird ein anfänglich aus dem Echosignal gemessener Eingabeintensitätswert, welcher größer oder gleich dem an der Sättigungsgrenze orientierten ersten Schwellwert ist, unter zusätzlicher Verwendung der Information aus dem Eingabepulsbreitenwert neu berechnet bzw. reskaliert. Dadurch erhält das damit erstellte Ausgabeintensitätsbild eine bessere Auflösung bzw. einen größeren Dynamikbereich bezogen auf die mit dem Ausgabeintensitätsbild übermittelte Intensitätsinformation.

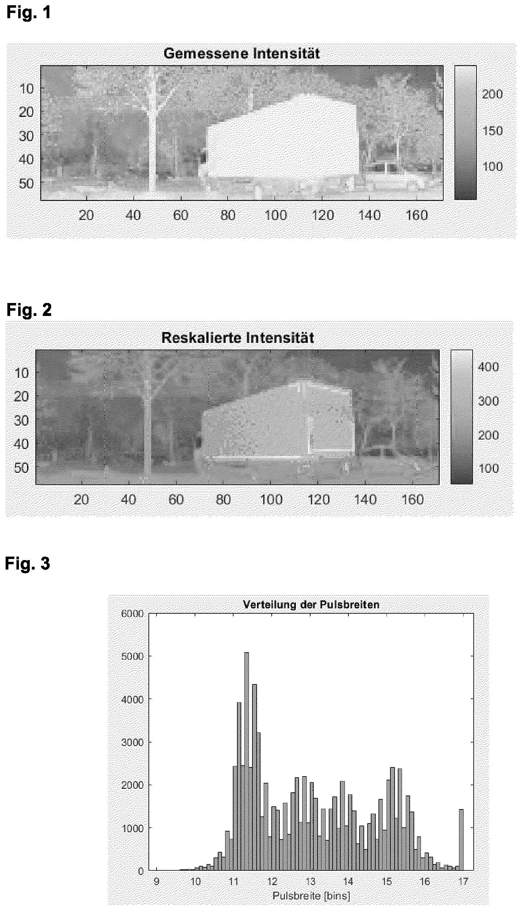

Das Eingabeintensitätsbild beinhaltet ein Distanzbild. Zusätzlich zu dem für jeden Datenpunkt aus dem Echosignal ermittelten Distanzwert weist jeder Datenpunkt einen Intensitätswert auf. Zur Ermittlung des Eingabeintensitätsbildes sendet der optische Laufzeitsensor, beispielsweise ein Lidarsensor, das Sendesignal, beispielsweise eine Folge von Laserpulsen, aus und misst die Zeit, die das Licht vom Aussenden, nach Reflexion bzw. Remission an Objekten und Oberflächen im Überwachungsbereich in Form des Echosignals bis zum Sensor zurück benötigt. Gleichzeitig wird aus dem Echosignal jeweils die Intensität, also Pulshöhe, sowie die Pulsbreite erfasst. Der Lauzeitsensor sendet bevorzugt immer die gleiche Pulsform aus. In einer Empfängereinheit des Laufzeitsensors entsteht allerdings je nach Höhe der mit dem Echosignal ankommenden optischen Leistung eine andere Pulsform, da eine den Empfängerelementen inhärente Totzeit den Puls verzerrt. Je nach Architektur der Empfängereinheit, bzw. Empfängerchips, wird der Puls mit zunehmender optischer Leistung aufgrund der Totzeit schmaler oder breiter bzw. länger falls ein Inverter verbaut ist. Jedem Datenpunkt des Eingabeintensitätsbildes ist folglich neben der aus der Lichtlaufzeit berechneten Distanzinformation auch ein Eingabeintensitätswert zugeordnet. In bekannten Implementierungen wird diese Intensitätsinformation direkt verwendet und entsprechend farblich oder in Graustufen in dem Intensitätsbild dargestellt. Ein derartiges Bild ist beispielhaft in Fig. 1 zu sehen. Hier ist die aus der Szene gemessene Intensität farblich codiert dargestellt. Fig. 1 zeigt somit ein Beispiel für das anspruchsgemäße Eingabeintensitätsbild, das hier beispielsweise mehrere Datenpunkte aufweist, denen jeweils ein Eingabeintensitätswert zugeordnet ist. Wie aus der rechten Skala zu erkennen ist, kann die gemessene Intensität Werte zwischen 0 und 240 annehmen. Deutlich zu sehen sind Bildbereiche, deren Intensitätswert jeweils den Maximalwert von 240 aufweisen, oder nahe bei 240 liegt. Der hierfür eingesetzte Laufzeitsensor verwendet Empfängerelemente mit Inverter-Architektur, sodass die Pulsbreite mit höherer optischen Leistung auf den Empfängerelementen, hier Einzelphotonenlawinenfotodioden, Englisch: Single Photon Avalanche Photodiodes, SPADs, zunimmt.

Durch das erfindungsgemäße Überprüfen der Datenpunkte des Eingabeintensitätsbildes auf Erreichen oder Überschreiten des ersten Schwellwerts und Ermitteln eines Ausgabeintensitätswerts unter Verwendung des zugehörigen Eingabepulsbreitenwerts wird die Qualität, insbesondere die Auflösung, der Intensitätsinformation verbessert, was in Fig. 2 zu sehen ist. Das dargestellte Beispiel eines anspruchsgemäßen Ausgabeintensitätsbildes, was unter Anwendung des vorgeschlagenen Verfahrens auf das Eingabedistanzbild aus Fig. 1 ermittelt wurde, zeigt die gleiche Szene mit den Ausgabeintensitätswerten nach Reskalierung der Eingabeintensitätswerte, die den ersten Schwellwert erreicht haben. Auf der rechten Seite ist die Intensitätsskala dargestellt, welche aufgrund der Reskalierung nun einen Maximalwert von in etwa 480 hat. Es ist zu erkennen, dass in dem Ausgabeintensitätsbild Sättigungseffekte vermieden werden und Details, beispielsweise im Bereich des dargestellten Lkws sichtbar werden, die in dem Eingabeintensitätsbild wie in Fig. 1 aufgrund der Sättigung nicht sichtbar waren.

Gemäß einer Weiterbildung wird der erste Schwellwert vorab in Abhängigkeit einer Realisierung des Laufzeitsensors, insbesondere dessen Empfangseinheit, definiert. Alternativ wird der erste Schwellwert vorab in einer Kalibrierungsmessung in Abhängigkeit eines höchsten gemessenen Intensitätswerts definiert. Der höchste Intensitätswert wird dabei während der Kalibrierungsmessung in dem Echosignal einer Kalibrierungsszene detektiert.

Beispielsweise wird der erste Schwellwert in Höhe von 85-95% des höchsten vorab gemessenen Intensitätswerts festgelegt. Alternativ ist die maximal messbare Intensität durch die Implementierung des Laufzeitsensors definiert. Bei Verwendung von SPADs ergibt diese sich beispielsweise aus dem Produkt aus einer Anzahl von pro Pixel eingesetzten SPADs, z.B. 24, und einer Anzahl an Schüssen, z.B. 10, und der Gleichstromverstärkung, Englisch DC gain, eines verwendeten Filters, z.B. FIR Filters. In dieser Alternative ist eine Kalibrierungsmessung nicht unbedingt nötig. Dabei bezieht sich ein Schuss auf einen einzelnen Laserimpuls, der von dem Laufzeitsensor ausgensendet wird. Üblicherweise werden mehrere derartige Schüsse pro Sekunde ausgesendet.

Da wie bereits beschrieben, die aus dem Echosignal gewonnene Intensitätsinformation von unterschiedlichen Faktoren abhängt, wie beispielsweise der Reflektivität von Oberflächen innerhalb einer Szene oder Umgebungsbedingungen, beispielsweise Wetterbedingungen wie Regen oder Schnee, sowie Rauschen, kann der erste Schwellwert bevorzugt mit Hilfe einer Kalibrierungsmessung an einer Kalibrierungsszene vorab ermittelt werden.

In einer Weiterbildung weist die in der Kalibrierungsmessung eingesetzte Kalibrierungsszene eines oder mehrere der folgenden Objekte auf: ein schwach reflektives Target, ein stark reflektives Target, einen Bereich mit geringem Rauschen, und einen Bereich mit hohem Rauschen.

Mit anderen Worten wird zur Kalibrierung eine Kalibrierungsszene eingesetzt, die möglichst alle realistischen Bedingungen einfängt, von besonders schwach reflektiven zu extrem reflektiven Targets mit wenig bis viel Hintergrundrauschen.

Gemäß einer Weiterbildung erfolgt das Ermitteln des Ausgabeintensitätswerts mit Bezug auf eine Implementierung eines in dem Laufzeitsensor verwendeten Empfängerelements unter Einsatz einer monoton steigenden oder einer monoton fallenden Funktion. Beispielsweise ist diese Funktion als lineare oder exponentielle Funktion realisiert.

Je nach Architektur eines in dem Laufzeitsensor verwendeten Empfängerelements wächst der Eingabepulsbreitenwert, wie beschrieben bei Einsatz einer Inverter-Architektur, oder fällt monoton mit steigender optischer Leistung auf dem Empfängerelement. Der bei der Ermittlung des Ausgabeintensitätswerts eingesetzte funktionale Zusammenhang zwischen Eingabepulsbreite und Ausgabeintensitätswert ist angepasst an die Implementierung bzw. Architektur dieses Empfängerelements. Der funktionale Zusammenhang kann beispielsweise linear, exponentiell, logarithmisch, als Potenzfunktion oder mittels einer anderen geeigneten Funktion implementiert sein.

Sofern der Laufzeitsensor ein Empfängerelement aufweist, bei dem die Eingabepulsbreitewerte mit steigender optischer Leistung sinken, wird eine monoton fallende Funktion bei der Ermittlung des Ausgabeintensitätswerts verwendet. Damit führt ein kleinster Wert der Eingabepulsbreite zu einem größten Ausgabeintensitätswert.

Zur Ermittlung dieser Funktion wird beispielsweise eine während der Kalibrierungsmessung ermittelte Verteilung der Eingabepulsbreitenwerte verwendet. Eine beispielhafte derartige Verteilung ist in Fig. 3 gezeigt. Auf der x-Achse ist hier ein jeweiliger Wert der Eingabepulsbreite bezogen auf ein jeweiliges Messintervall, welches als Englisch: Bin bezeichnet wird, dargestellt, während eine Häufigkeit des jeweiligen Pulsbreitenwerts auf der y-Achse dargestellt ist. Das Diagramm von Fig. 3 zeigt dabei ausschließlich die aus den Echosignalen mit Eingabeintensitätswerten oberhalb oder gleich dem ersten Schwellwert jeweils gemessenen Eingabepulsbreitenwerte. Bei der dieser Messung zugrundeliegende Architektur des Sensors werden jeweils die Ausgangssignale von 24 SPADs nach zehn Sendeimpulsen in einem Datenpunkt zusammengefasst bzw. akkumuliert. In einer beispielhaften Implementierung der anspruchsgemäßen Funktion wird der niedrigste Wert der Eingangspulsbreite, hier 9.5, dem ebenfalls in der Kalibrierung ermittelten maximalen Eingabeintensitätswert, beispielsweise 240 gemäß Fig. 1, zugewiesen. Werte der Eingabepulsbreite zwischen 9,5 und 17 werden beispielsweise auf einen Bereich von maximalem bis zweifach maximalem Eingabeintensitätswert, hier 240 bis 480, linear abgebildet. Damit haben in diesem Beispiel im Eingabedistanzbild gesättigte und ungesättigte Datenpunkte nach Reskalierung im Ausgabeintensitätsbild die nahezu gleiche Auflösung. Anders ausgedrückt sind die Bereiche von ursprünglich, d.h. gemäß Eingabeintensitätsbild, gesättigten und ursprünglich ungesättigten Bereichen in etwa gleich groß. Es sind jedoch auch andere Skalierungen möglich.

Gemäß einer Ausführungsform ist der ermittelte Ausgabeintensitätswert größer als der Eingabeintensitätswert.

Gemäß einer Weiterbildung umfasst das Ermitteln des Ausgabeintensitätswerts für den mindestens einen Datenpunkt zusätzlich einen Vergleich des Eingabeintensitätswerts des mindestens einen Datenpunkts mit einem vordefinierten zweiten Schwellwert. Der zweite Schwellwert ist größer als der erste Schwellwert. Falls der Eingabeintensitätswert größer als der zweite Schwellwert ist, erfolgt das Ermitteln des Ausgabeintensitätswerts als Funktion ausschließlich der Eingabepulsbreite des mindestens einen Datenpunkts.

Der zweite Schwellwert wird beispielsweise so festgelegt, dass er an den maximal messbaren Eingabeintensitätswert angepasst ist oder nur wenig unter diesem liegt.

In einer Weiterentwicklung erfolgt das Ermitteln des Ausgabeintensitätswerts unter Einbeziehung eines Mindestpulsbreitenwerts und ausgehend von dem zweiten Schwellwert. Der Mindestpulsbreitenwert wird vorab in einer Kalibrierungsmessung in Abhängigkeit eines kleinsten gemessenen Pulsbreitenwerts eines Datenpunkts, dessen Eingabeintensitätswert oberhalb des ersten Schwellwerts liegt definiert. Dieser wird während der Kalibrierungsmessung einer Kalibrierungsszene aus dem Echosignal detektiert.

Beispielsweise ergibt sich für einen Eingabeintensitätswert, der den zweiten Schwellwert übersteigt, der Ausgabeintensitätswert als Produkt eines ersten Skalierungsfaktors mit dem zweiten Schwellwert, zu welchem das Produkt eines zweiten Skalierungsfaktors mit der Differenz aus Eingabepulsbreitenwert und Mindestpulsbreitenwert addiert wird gemäß folgender Gleichung: ${int}_{rescaled} = x ∗ intThreshold 2 + y ∗ \left({pw}_{echo}-{pw}_{min}\right)$

Dabei repräsentiert pwₘᵢₙ den Mindestpulsbreitenwert, pw_{echo} den Eingabepulsbreitenwert, intThreshold2 den zweiten Schwellwert und int_{rescaled} den Ausgabeintensitätswert. x repräsentiert den ersten Skalierungsfaktor, während y den zweiten Skalierungsfaktor darstellt. Mit Hilfe der beiden Skalierungsfaktoren x und y wird eine Größe und eine Auflösung des Pulsbreitenbereichs eingestellt.

Sofern ein Eingabeintensitätswert zwischen dem ersten und dem zweiten vordefinierten Schwellenwert liegt, hängt der Ausgabeintensitätswert vom Eingabeintensitätswert und von der Eingabepulsbreite ab. Zur Bestimmung des Ausgabeintensitätswerts kann beispielsweise ein gewichteter Mittelwert eingesetzt werden. Der Ausgabeintensitätswert int_{rescaled} wird also beispielsweise unter Verwendung der folgenden Transformationen ermittelt: $intTmp = x ∗ {int}_{echo}$ $pwTmp = x ∗ intThreshold 2 + y ∗ \left({pw}_{echo}-{pw}_{min}\right)$ $factor = \left({int}_{echo}-intThreshold1\right) / \left(intThreshold2-intThreshold1\right)$ ${int}_{rescaled} = factor ∗ pwTmp + \left(1-factor\right) ∗ intTmp$

Dabei bezeichnet int_{Tmp} einen berechneten Hilfsintensitätswert, int_{echo} den Eingabeintensitätswert, pwTmp einen berechneten Hilfspulsbreitenwert, factor bezeichnet den in einem Zwischenschritt ermittelten Skalierungsfaktor und intThreshold1 den ersten Schwellwert.

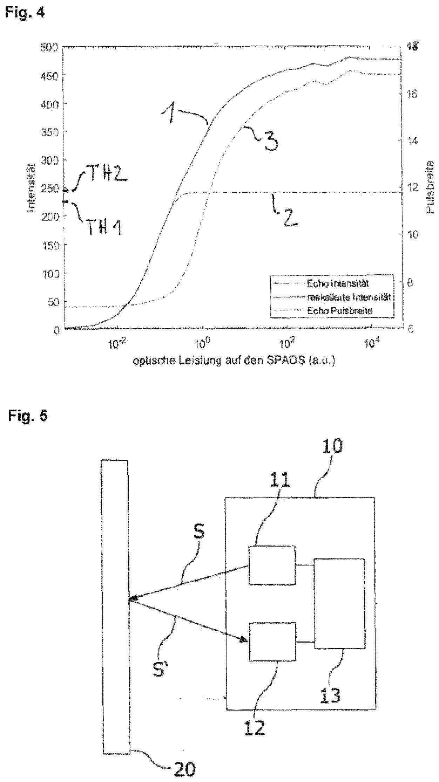

Somit ergibt sich der beispielhaft in Fig. 4 dargestellte Verlauf der Ausgabeintensität mit Bezug auf die optische Leistung auf den Empfängerelementen. Figur 4 wird unten näher erläutert.

In einer Weiterbildung weist das Verfahren folgendes auf: falls der Eingabeintensitätswert des mindestens einen Datenpunkts kleiner als der vordefinierte erste Schwellwert ist, Bereitstellen des Ausgabeintensitätswerts nur in Abhängigkeit des Eingabeintensitätswerts, insbesondere nach Multiplikation des Eingabeintensitätswerts mit einem Skalierungsfaktor.

Hiermit wird der Fall abgedeckt, dass der Eingabeintensitätswert im nicht gesättigten Bereich liegt. Folglich wird der Eingabeintensitätswert direkt in den Ausgabeintensitätswert übergeführt. Alternativ wird der Eingabeintensitätswert noch mit dem Skalierungsfaktor multipliziert und das so erhaltene Produkt wird als Ausgabeintensitätswert bereitgestellt. Beispielsweise wird folgende Rechenvorschrift eingesetzt: ${int}_{rescaled} = x ∗ {int}_{echo}$

Durch diese lineare Skalierung mit dem Faktor x lassen sich Größe und Auflösung von gesättigtem und ungesättigtem Bereich noch feiner einstellen.

In einer Weiterbildung wird der Schritt des Überprüfens des Eingabeintensitätswerts des mindestens einen Datenpunkts für mehrere, insbesondere für alle, Datenpunkte des Eingabeintensitätsbildes durchgeführt.

Die Auflösung der Intensitätsinformation wird somit für große Bereiche, vorzugsweise für das gesamte Eingabedistanzbild, verbessert und ein entsprechendes Ausgabedistanzbild bereitgestellt, bei dem mehrere bzw. alle Datenpunkte einen gemäß dem vorgeschlagenen Verfahren überarbeiteten Intensitätswert haben. Objektdetektionsalgorithmen, welche mit dem Ausgabedistanzbild arbeiten, sind dadurch besser in der Lage, auf dem Bild dargestellte Objekte voneinander zu unterscheiden, die aufgrund der Sättigung im Eingabedistanzbild ununterscheidbar miteinander verschmelzen, wie dies in Bezug auf Fig. 1 und 2 oben verdeutlicht wurde.

In einer Weiterbildung umfasst das Ermitteln des Ausgabeintensitätswerts ein Überprüfen, ob der Eingabepulsbreitenwert des mindestens einen Datenpunkts kleiner als ein Mindestpulsbreitenwert ist. Trifft dies zu, wird der Mindestpulsbreitenwert als Eingabepulsbreitenwert verwendet. Trifft dies nicht zu, wird überprüft, ob der Eingabepulsbreitenwert größer als ein maximaler Eingabepulsbreitenwert ist. Falls dies zutrifft, wird der maximale Eingabepulsbreitenwerts als Eingabepulsbreitenwert verwendet. Auch dabei wird der Mindestpulsbreitenwert vorab in einer Kalibrierungsmessung in Abhängigkeit eines kleinsten aus dem in der Kalibrierungsmessung detektierten Echosignal einer Kalibrierungsszene gemessenen Pulsbreitenwerts eines Datenpunkts, dessen Eingabeintensitätswert oberhalb des ersten Schwellwerts liegt, definiert. Der maximale Eingabepulsbreitenwert wird vorab in der Kalibrierungsmessung in Abhängigkeit eines größten aus dem in der Kalibrierungsmessung detektierten Echosignal einer Kalibrierungsszene gemessenen Pulsbreitenwerts eines Datenpunkts, dessen Eingabeintensitätswert oberhalb des ersten Schwellwerts liegt, definiert.

In dieser Weiterbildung wird die Eingabepulsbreite in eine oder beide Richtungen, also in Richtung minimalem beziehungsweise maximalem Wert, in Sättigung gebracht. Dabei wird vor der Berechnung des Ausgabeintensitätswerts bei einem Datenpunkt dessen Eingabeintensitätswert den ersten Schwellwert erreicht oder übersteigt, der Eingabepulsbreitenwert, falls er kleiner als der Mindestpulsbreitenwert ist, auf den Mindestpulsbreitenwert gesetzt. Im Beispiel der Fig. 3 beträgt der Mindestpulsbreitenwert 9,5. Ist der Eingabepulsbreitenwert größer als der maximale Eingabepulsbreitenwert, wird der Eingabepulsbreitenwert auf den maximalen Eingabepulsbreitenwert gesetzt. Im Beispiel der Fig. 3 beträgt der maximale Eingabepulsbreitenwert 17. Der maximale Eingabepulsbreitenwert kann auch als maximal erwarteter Eingabepulsbreitenwert bezeichnet werden. Durch die Maßnahme dieser Weiterbildung wird für einen verfälschten oder unrealistischen Eingabeintensitätswert nicht ein zu großer oder zu kleiner Ausgabeintensitätswert bestimmt. Dies ist zum Beispiel dann relevant, wenn die Eingabepulsbreite durch Mehrfachtreffer vergrößert ist.

Die Kalibrierungsmessung ist von Vorteil, um den Bereich der möglichen Pulsbreiten abschätzen zu können, da dieser nicht bei jedem System offensichtlich, beispielsweise durch die Implementierung gegeben, ist.

In einer Weiterbildung ist der Mindestpulsbreitenwert beziehungsweise der maximale Eingabepulsbreitenwert distanzabhängig, also abhängig von einem dem Datenpunkt zugeordneten Distanzwert. Dies ist von Vorteil bei einem Laufzeitsensor mit einer starken Parallaxe, welche unter Umständen ein distanzabhängiges Sättigungsverhalten der in dem Sensor eingesetzten lichtsensitiven Elemente bedingt, was sich in unterschiedlich hohen Mindestpulsbreitenwerten bzw. maximalen Pulsbreiten bei gleichem maximalem Eingabeintensitätswert zeigt. Dazu wird beispielsweise für unterschiedliche Distanzen jeweils eine Kalibrierungsmessung durchgeführt, die jeweils eine Verteilung ähnlich der in Fig. 3 gezeigten Verteilung ergibt. Die unterschiedlichen Verteilungen werden beispielsweise in Tabellenform, also sogenannte Englisch: look-up table, mit Bezug zur jeweiligen Distanz hinterlegt. Ein jeweils benötigter Mindestpulsbreitenwert bzw. maximaler Eingabepulsbreitenwert kann dann unter Verwendung des dem Datenpunkt zugeordneten Distanzwerts aus der Tabelle ausgelesen werden.

Weiterer Gegenstand der vorliegenden Anmeldung ist ein optischer Laufzeitsensor. Dieser umfasst eine Sendeeinheit, eine Empfangseinheit und eine Auswerteeinheit, welche untereinander verbunden sind. Die Sendeeinheit umfasst eine Signalquelle, insbesondere Lichtquelle, insbesondere eine Laserdiode. Die Sendeeinheit ist zum Aussenden eines Sendesignals, insbesondere eines Lichtstrahls in gepulster Form, eingerichtet. Die Empfangseinheit umfasst ein Empfängerelement und ist zur Detektion eines von einer Szene reflektierten Echosignals eingerichtet. Die Auswerteeinheit ist dazu eingerichtet, aus dem Echosignal ein Eingabeintensitätsbild zu ermitteln, wobei das Eingabeintensitätsbild mindestens einen Datenpunkt, insbesondere mehrere Datenpunkte, aufweist, welchem, insbesondere welchen jeweils, zumindest ein Eingabeintensitätswert und ein Eingabepulsbreitenwert zugeordnet ist. Dabei ist der Eingabeintensitätswert und der Eingabepulsbreitenwert jeweils aus dem detektierten Echosignal bestimmt. Die Auswerteeinheit ist weiter dazu eingerichtet, für mindestens einen Datenpunkt des Eingabeintensitätsbildes zu überprüfen, ob sein Eingabeintensitätswert einen vordefinierten ersten Schwellwert erreicht oder übersteigt, und falls ja, für den mindestens einen Datenpunkt einen Ausgabeintensitätswert zu ermitteln. Dabei ist der Ausgabeintensitätswert eine Funktion des Eingabeintensitätswerts und des Eingabepulsbreitenwerts. Alternativ ist der Ausgabeintensitätswert eine Funktion nur des Eingabepulsbreitenwerts. Schließlich ist die Auswerteeinheit dazu eingerichtet, ein Ausgabeintensitätsbild mit dem mindestens einen Datenpunkt mit dem Ausgabeintensitätswert bereitzustellen.

Der optische Laufzeitsensor emittiert das Sendesignal in Richtung einer Szene, die in seinem Überwachungsbereich liegt. Das Sendesignal wird von Objekten dieser Szene als Echosignal zum Laufzeitsensor remittiert und dort detektiert. Aus dem Echosignal bestimmt der Laufzeitsensor das Eingabeintensitätsbild mit mehreren Datenpunkten. Jedem Datenpunkt ist ein Eingabeintensitätswert und ein Eingabepulsbreitenwert, welche jeweils aus dem Echosignal gemessen wurden, zugeordnet. Nun überprüft der Laufzeitsensor bei mindestens einem Datenpunkt, ob dessen Eingabeintensitätswert dem ersten Schwellwert gleicht oder oberhalb desselben liegt und berechnet, falls dies zutrifft, für den betreffenden Datenpunkt den Ausgabeintensitätswert unter Verwendung des Eingabepulsbreitenwerts. Alternativ kann für diese Berechnung zusätzlich der Eingabeintensitätswert des betreffenden Datenpunkts herangezogen werden. Das Ausgabeintensitätsbild wird nun unter Verwendung des für den mindestens einen Datenpunkt berechneten Ausgabeintensitätswerts bereitgestellt.

Mit Vorteil ist die Auflösung der Intensitätsinformation in dem von dem erfindungsgemäßen Laufzeitsensor bereitgestellten Ausgabeintensitätsbild verbessert, indem aufgrund der Reskalierung des aus dem Echosignal gewonnen Eingabeintensitätswerts unter Verwendung des Eingabepulsbreitenwerts Sättigungseffekte weitestgehend oder gänzlich vermieden werden. Da auch der Eingabepulsbreitenwert ein Maß für die vom Laufzeitsensor mit dem Echosignal empfangene optische Leistung ist, wird in dem erfindungsgemäßen Laufzeitsensor die optische Leistung im Ausgabeintensitätsbild in differenzierter Form hochaufgelöst sichtbar gemacht.

Das oben beschriebene erfindungsgemäße Verfahren wird beispielsweise unter Verwendung des Laufzeitsensors implementiert.

Die obigen Erläuterungen zum erfindungsgemäßen Verfahren gelten für den erfindungsgemäßen Laufzeitsensor entsprechend. Dies bezieht sich insbesondere auf die Vorteile und bevorzugten Ausführungsformen.

Gemäß einer Weiterbildung umfasst das Empfängerelement des Laufzeitsensors eine Vielzahl lichtsensitiver Elemente, die jeweils eine Fotodiode, insbesondere eine Lawinenfotodiode aufweisen. Dabei sind jeweils mindestens zwei lichtsensitive Elemente aus der Vielzahl lichtsensitiver Elemente einem Datenpunkt des Eingabeintensitätsbildes zugeordnet. Der Eingabeintensitätswert und der Eingabepulsbreitenwert eines jeweiligen Datenpunkts werden jeweils aus Signalen, welche von den mindestens zwei dem jeweiligen Datenpunkt zugeordneten lichtsensitiven Elementen aufgrund der Detektion des Echosignals bereitgestellt sind, ermittelt.

Dabei kann eine Lawinenfotodiode auch als Einzelphotonenlawinenfotodiode, SPAD, implementiert sein. Je nach Architektur und Implementierung des optischen Laufzeitsensors sind auch mehr als zwei Fotodioden miteinander verschaltet und liefern für den Datenpunkt, dem sie zugeordnet sind, Signale zum Messen des Eingabeintensitätswerts und des Eingabepulsbreitenwerts.

Gemäß einer Weiterbildung ist der optische Laufzeitsensor als Light Detection and Ranging, Lidarsensor, insbesondere als dreidimensionaler Lidarsensor realisiert.

Beispielsweise wird der optische Laufzeitsensor in einem dreidimensionalen Scanner auf einem fahrerlosen Transportfahrzeug, auch bekannt als Englisch: automated guided vehicle, AGV, eingesetzt.

Weiterer Gegenstand der Erfindung ist ein Computerprogrammprodukt, das ein computerlesbares Speichermedium umfasst, auf welchem ein Programm gespeichert ist, welches es einem Computer ermöglicht, nach Einlesen des Programms in einen Speicher des Computers das oben beschriebene Verfahren zum Betreiben eines optischen Laufzeitsensors auszuführen. Dies insbesondere in Zusammenwirken mit dem oben beschriebenen optischen Laufzeitsensor.

Die hierin beschriebenen Ausführungsformen können untereinander kombiniert werden, sofern es sich nicht explizit anders ergibt oder beschrieben ist.

Die Erfindung wird rein beispielhaft unter Bezugnahme auf die Figuren weiter erläutert. Es zeigen:
- Fig. 1: ein beispielhaftes Eingabedistanzbild,
- Fig. 2: ein beispielhaftes Ausgabedistanzbild,
- Fig. 3: ein beispielhaftes Diagramm einer Verteilung der Eingabepulsbreitenwerte,
- Fig. 4: ein beispielhaftes Diagramm der erfindungsgemäß ermittelten Ausgabeintensitätswerte, und
- Fig. 5: eine beispielhafte Ausführungsform des Laufzeitsensors wie vorgeschlagen.

Bezüglich der Fig. 1 bis 3 wird auf die Beschreibung weiter oben verwiesen.

Fig. 4 zeigt ein beispielhaftes Diagramm des Ausgabeintensitätswerts, welcher mit dem erfindungsgemäßen Verfahren bzw. dem erfindungsgemäßen Laufzeitsensor ermittelt wurde. Der Verlauf des Ausgabeintensitätswerts eines Datenpunkts ist als Kurve mit dem Bezugszeichen 1 bezogen auf die auf der x-Achse dargestellte optische Leistung der diesem Datenpunkt zugeordneten lichtsensitiven Elemente, hier SPADs, gezeigt. Auf der linken Seite befindet sich eine Skala für die Intensitätswerte, während die Skala auf der rechten Seite für die Pulsbreitenwerte gilt. Des Weiteren ist mit Kurve 2 der Verlauf des Eingabeintensitätswerts für diesen Datenpunkt bezogen auf die optische Leistung dargestellt. Kurve 3 zeigt den Verlauf des Eingabepulsbreitenwerts des Datenpunkts bezogen auf die optische Leistung. Auf der linken Skala sind zusätzlich der erste vordefinierte Schwellwert TH1 und der zweite vordefinierte Schwellwert TH2 eingezeichnet. Der erste Schwellwert TH1 ist hier beispielhaft auf den Wert 224 gesetzt, während der zweite Schwellwert TH2 beispielhaft bei 240 liegt.

Aus den Verläufen ist zu erkennen, dass die Kurve 2, also der Eingabeintensitätswert in etwa ab einem Wert von 240 in die Sättigung gerät und folglich trotz Zunahme der optischen Leistung auf den SPADs des Datenpunkts nicht mehr steigt. Demgegenüber ist zu beobachten, dass die Kurve 3, also der Verlauf der Eingabepulsbreitenwerte, bei Zunahme der optischen Leistung weiter steigt und erst bei sehr hohen Werten der optischen Leistung, hier jenseits von 10⁴, in die Sättigung gerät. Der Verlauf des Ausgabeintensitätswerts, also Kurve 1, fällt im Bereich unterhalb des ersten Schwellwerts zusammen mit dem Verlauf des Eingabeintensitätswerts von Kurve 2. In einem Übergangsbereich zwischen dem ersten Schwellwert TH1 und dem zweiten Schwellwert TH2 steigt der Ausgabeintensitätswert aufgrund der zusätzlichen Verwendung des Eingabepulsbreitenwerts trotz der Sättigung des Eingabeintensitätswerts weiter an. Oberhalb des zweiten Schwellwerts verläuft die Kurve 1 des Ausgabeintensitätswerts in etwa parallel zur Kurve 3 des Eingabepulsbreitenwerts, weil in diesem Bereich ausgehend von dem maximal messbaren Eingabeintensitätswert nur noch der Eingabepulsbreitenwert herangezogen wird, um den Ausgabeintensitätswert zu bestimmen, wie oben näher beschrieben.

Die mit dem erfindungsgemäßen Verfahren bzw. dem erfindungsgemäßen Laufzeitsensor ermittelte Ausgabeintensität spiegelt, wie deutlich zu erkennen ist, die optische Leistung auf den SPADs wider und gerät erst bei extrem hohen Werten der optischen Leistung in eine Sättigung, wenn nämlich auch die Eingabepulsbreitenwerte in die Sättigung geraten.

Fig. 5 zeigt ein Ausführungsbeispiel des optischen Laufzeitsensors wie vorgeschlagen. Der Laufzeitsensor 10 umfasst eine Sendeeinheit 11, eine Empfangseinheit 12, sowie eine Auswerteeinheit 13. Der Laufzeitsensor ist beispielsweise dazu eingerichtet, das oben beschriebene Verfahren auszuführen. Dazu sendet der Laufzeitsensor 10, insbesondere seine Sendeeinheit 11, das Sendesignal S in den Überwachungsbereich aus. Nach Reflexion oder Remission an der Szene 20 detektiert der Laufzeitsensor 10, insbesondere seine Empfangseinheit 12, das Echosignal S'. Die Auswerteeinheit 13 steuert Sendeeinheit 11 und Empfangseinheit 12. Ferner führt beispielsweise die Auswerteeinheit 13 die oben beschriebenen Schritte zum Ermitteln des Ausgabeintensitätswerts durch.

### Bezugszeichenliste

- 1, 2, 3: Kurve
- TH1, TH2: Schwellwert
- 10: Laufzeitsensor
- 11: Sendeeinheit
- 12: Empfangseinheit
- 13: Auswerteeinheit

## Patentansprüche

1. Verfahren zum Betreiben eines optischen Laufzeitsensors aufweisend folgende Schritte:
Ermitteln eines Eingabeintensitätsbildes mit dem optischen Laufzeitsensor (10), wobei das Eingabeintensitätsbild mindestens einen Datenpunkt, insbesondere mehrere Datenpunkte, aufweist, welchem, insbesondere welchen jeweils, zumindest ein Eingabeintensitätswert und ein Eingabepulsbreitenwert zugeordnet ist, wobei der Eingabeintensitätswert und der Eingabepulsbreitenwert jeweils aus einem Echosignal bestimmt wird, welches von dem Laufzeitsensor (10) nach Aussenden eines Sendesignals und dessen Remission an einer Szene detektiert wird,
Überprüfen für mindestens einen Datenpunkt des Eingabeintensitätsbildes, ob sein Eingabeintensitätswert einen vordefinierten ersten Schwellwert (TH1) erreicht oder übersteigt, falls ja, Ermitteln eines Ausgabeintensitätswerts für den mindestens einen Datenpunkt, wobei der Ausgabeintensitätswert eine Funktion des Eingabeintensitätswerts und des Eingabepulsbreitenwerts ist oder wobei der Ausgabeintensitätswert nur eine Funktion des Eingabepulsbreitenwerts ist, und
Bereitstellen eines Ausgabeintensitätsbildes mit dem mindestens einen Datenpunkt mit dem Ausgabeintensitätswert.

2. Verfahren nach Anspruch 1,
wobei der erste Schwellwert (TH1) in Abhängigkeit einer Realisierung des Laufzeitsensors, insbesondere dessen Empfangseinheit, definiert wird oder vorab in einer Kalibrierungsmessung in Abhängigkeit eines höchsten aus dem in der Kalibrierungsmessung detektierten Echosignal einer Kalibrierungsszene gemessenen Intensitätswerts definiert wird.

3. Verfahren nach Anspruch 2,
wobei die in der Kalibrierungsmessung eingesetzte Kalibrierungsszene eines oder mehrere der folgenden Objekte aufweist:
ein schwach reflektives Target,
ein stark reflektives Target,
einen Bereich mit geringem Rauschen,
einen Bereich mit hohem Rauschen.

4. Verfahren nach einem der vorstehenden Ansprüche,
wobei das Ermitteln des Ausgabeintensitätswerts mit Bezug auf eine Implementierung eines in dem Laufzeitsensor (10) verwendeten Empfängerelements unter Einsatz einer monoton steigenden oder einer monoton fallenden Funktion erfolgt, beispielsweise einer linearen oder exponentiellen Funktion.

5. Verfahren nach einem der vorstehenden Ansprüche,
wobei der ermittelte Ausgabeintensitätswert größer als der Eingabeintensitätswert ist.

6. Verfahren nach einem der vorstehenden Ansprüche,
wobei das Ermitteln des Ausgabeintensitätswerts für den mindestens einen Datenpunkt zusätzlich einen Vergleich des Eingabeintensitätswerts des mindestens einen Datenpunkts mit einem vordefinierten zweiten Schwellwert (TH2), welcher größer als der erste vordefinierte Schwellwert (TH1) ist, umfasst, und falls der Eingabeintensitätswert größer als der zweite Schwellwert (TH2) ist, das Ermitteln des Ausgabeintensitätswerts nur als Funktion der Eingabepulsbreite des mindestens einen Datenpunkts erfolgt.

7. Verfahren nach dem vorstehenden Anspruch,
wobei das Ermitteln des Ausgabeintensitätswerts unter Einbeziehen eines Mindestpulsbreitenwerts und ausgehend von dem zweiten Schwellwert (TH2) erfolgt, wobei der Mindestpulsbreitenwert vorab in einer Kalibrierungsmessung in Abhängigkeit eines kleinsten aus dem in der Kalibrierungsmessung detektierten Echosignal einer Kalibrierungsszene gemessenen Pulsbreitenwerts eines Datenpunkts, dessen Eingabeintensitätswert oberhalb des ersten Schwellwerts (TH1) liegt, definiert wird.

8. Verfahren nach einem der vorstehenden Ansprüche, weiter aufweisend:
falls der Eingabeintensitätswert des mindestens einen Datenpunkts kleiner als der vordefinierte erste Schwellwert (TH1) ist, Bereitstellen des Ausgabeintensitätswerts nur in Abhängigkeit des Eingabeintensitätswerts, insbesondere nach Multiplikation des Eingabeintensitätswerts mit einem Skalierungsfaktor.

9. Verfahren nach einem der vorstehenden Ansprüche,
wobei der Schritt des Überprüfens des Eingabeintensitätswerts des mindestens einen Datenpunkts für mehrere, insbesondere für alle, Datenpunkte des Eingabeintensitätsbildes durchgeführt wird.

10. Verfahren nach einem der vorstehenden Ansprüche,
wobei das Ermitteln des Ausgabeintensitätswerts folgendes umfasst:
Überprüfen ob der Eingabepulsbreitenwert des mindestens einen Datenpunkts kleiner als ein Mindestpulsbreitenwert ist, falls ja, Verwendung des Mindestpulsbreitenwerts als Eingabepulsbreitenwert, falls nein, Überprüfen, ob der Eingabepulsbreitenwert größer als ein maximaler Eingabepulsbreitenwert ist, und falls dies zutrifft Verwenden des maximalen Eingabepulsbreitenwerts als Eingabepulsbreitenwert,
wobei der Mindestpulsbreitenwert vorab in einer Kalibrierungsmessung in Abhängigkeit eines kleinsten aus dem in der Kalibrierungsmessung detektierten Echosignal einer Kalibrierungsszene gemessenen Pulsbreitenwerts eines Datenpunkts, dessen Eingabeintensitätswert oberhalb des ersten Schwellwerts (TH1) liegt, definiert wird,
und wobei der maximale Eingabepulsbreitenwert vorab in der Kalibrierungsmessung in Abhängigkeit eines größten aus dem in der Kalibrierungsmessung detektierten Echosignal einer Kalibrierungsszene gemessenen Pulsbreitenwerts eines Datenpunkts, dessen Eingabeintensitätswert oberhalb des ersten Schwellwerts (TH1) liegt, definiert wird.

11. Verfahren Anspruch 7 oder 10,
wobei der Mindestpulsbreitenwert und/oder der maximale Eingabepulsbreitenwert zusätzlich abhängig von einem dem Datenpunkt zugeordneten Distanzwert, ist/sind.

12. Optischer Laufzeitsensor (10) umfassend
eine Sendeeinheit (11), eine Empfangseinheit (12) und eine Auswerteeinheit (13), die miteinander verbunden sind,
wobei die Sendeeinheit (11) eine Signalquelle, insbesondere eine Lichtquelle, insbesondere eine Laserdiode, umfasst, und zum Aussenden eines Sendesignals (S), insbesondere eines Lichtstrahls in gepulster Form, eingerichtet ist,
wobei die Empfangseinheit (12) ein Empfängerelement umfasst und zur Detektion eines von einer Szene (20) reflektierten Echosignals (S') eingerichtet ist, und
wobei die Auswerteeinheit (13) dazu eingerichtet ist,
aus dem Echosignal ein Eingabeintensitätsbild zu ermitteln, wobei das Eingabeintensitätsbild mindestens einen Datenpunkt, insbesondere mehrere Datenpunkte, aufweist, dem, insbesondere denen jeweils, zumindest ein Eingabeintensitätswert und ein Eingabepulsbreitenwert zugeordnet ist, wobei der Eingabeintensitätswert und der Eingabepulsbreitenwert jeweils aus dem detektierten Echosignals bestimmt ist,
für mindestens einen Datenpunkt des Eingabeintensitätsbildes zu überprüfen, ob sein Eingabeintensitätswert einen vordefinierten ersten Schwellwert (TH1) erreicht oder übersteigt, falls ja, für den mindestens einen Datenpunkt einen Ausgabeintensitätswerts zu ermitteln, wobei der Ausgabeintensitätswert eine Funktion des Eingabeintensitätswerts und des Eingabepulsbreitenwerts ist oder wobei der Ausgabeintensitätswert eine Funktion nur des Eingabepulsbreitenwerts ist, und
ein Ausgabeintensitätsbild mit dem mindestens einen Datenpunkt mit dem Ausgabeintensitätswert bereitzustellen.

13. Optischer Laufzeitsensor (10) nach dem vorstehenden Anspruch,
wobei das Empfängerelement eine Vielzahl lichtsensitiver Elemente umfasst, die jeweils eine Fotodiode, insbesondere eine Lawinenfotodiode, aufweisen, wobei jeweils mindestens zwei lichtsensitiver Elemente aus der Vielzahl lichtsensitiver Elemente einem Datenpunkt des Eingabeintensitätsbildes zugeordnet sind, und wobei der Eingabeintensitätswert und der Eingabepulsbreitenwert eines jeweiligen Datenpunkts jeweils aus Signalen ermittelt werden, welche von den mindestens zwei dem jeweiligen Datenpunkt zugeordneten lichtsensitiven Elementen aufgrund der Detektion des Echosignals bereitgestellt sind.

14. Optischer Laufzeitsensor (10) nach Anspruch 12 oder 13,
wobei der optische Laufzeitsensor als Light Detection and Ranging, LiDAR, Sensor, insbesondere als dreidimensionaler LiDAR Sensor realisiert ist.

15. Computerprogrammprodukt, das ein computerlesbares Speichermedium umfasst, auf welchem ein Programm gespeichert ist, das es einem Computer ermöglicht, nach Einlesen des Programms in einen Speicher des Computers das Verfahren gemäß einem der Ansprüche 1 bis 11 insbesondere im Zusammenwirken mit dem optischen Laufzeitsensor gemäß einem der Ansprüche 12 bis 14 auszuführen.

## Geänderte Patentansprüche

### Geänderte Patentansprüche gemäss Regel 137(2) EPÜ.

1. Verfahren zum Betreiben eines optischen Laufzeitsensors aufweisend folgende Schritte:
Ermitteln eines Eingabeintensitätsbildes mit dem optischen Laufzeitsensor (10), wobei das Eingabeintensitätsbild mehrere Datenpunkte aufweist, welchen jeweils zumindest ein Eingabeintensitätswert und ein Eingabepulsbreitenwert zugeordnet ist, wobei der Eingabeintensitätswert und der Eingabepulsbreitenwert jeweils aus einem Echosignal bestimmt wird, welches von dem Laufzeitsensor (10) nach Aussenden eines Sendesignals und dessen Remission an einer Szene detektiert wird,
Überprüfen für mindestens einen Datenpunkt des Eingabeintensitätsbildes, ob sein Eingabeintensitätswert einen vordefinierten ersten Schwellwert (TH1) erreicht oder übersteigt, falls ja, Ermitteln eines Ausgabeintensitätswerts für den mindestens einen Datenpunkt, wobei der Ausgabeintensitätswert eine Funktion des Eingabeintensitätswerts und des Eingabepulsbreitenwerts ist oder wobei der Ausgabeintensitätswert nur eine Funktion des Eingabepulsbreitenwerts ist, und
Bereitstellen eines Ausgabeintensitätsbildes mit dem mindestens einen Datenpunkt mit dem Ausgabeintensitätswert,
wobei das Ermitteln des Ausgabeintensitätswerts für den mindestens einen Datenpunkt zusätzlich einen Vergleich des Eingabeintensitätswerts des mindestens einen Datenpunkts mit einem vordefinierten zweiten Schwellwert (TH2), welcher größer als der erste vordefinierte Schwellwert (TH1) ist, umfasst, und falls der Eingabeintensitätswert größer als der zweite Schwellwert (TH2) ist, das Ermitteln des Ausgabeintensitätswerts nur als Funktion der Eingabepulsbreite des mindestens einen Datenpunkts erfolgt, dabei wird der zweite Schwellwert (TH2) so festgelegt, dass er an einen maximal messbaren Eingabeintensitätswert angepasst ist oder nur wenig unter diesem liegt.

2. Verfahren nach Anspruch 1,
wobei der erste Schwellwert (TH1) in Abhängigkeit einer Realisierung des Laufzeitsensors, insbesondere dessen Empfangseinheit, definiert wird oder vorab in einer Kalibrierungsmessung in Abhängigkeit eines höchsten aus dem in der Kalibrierungsmessung detektierten Echosignal einer Kalibrierungsszene gemessenen Intensitätswerts definiert wird.

3. Verfahren nach Anspruch 2,
wobei die in der Kalibrierungsmessung eingesetzte Kalibrierungsszene eines oder mehrere der folgenden Objekte aufweist:
ein schwach reflektives Target,
ein stark reflektives Target,
einen Bereich mit geringem Rauschen,
einen Bereich mit hohem Rauschen.

4. Verfahren nach einem der vorstehenden Ansprüche,
wobei das Ermitteln des Ausgabeintensitätswerts mit Bezug auf eine Implementierung eines in dem Laufzeitsensor (10) verwendeten Empfängerelements unter Einsatz einer monoton steigenden oder einer monoton fallenden Funktion erfolgt, beispielsweise einer linearen oder exponentiellen Funktion.

5. Verfahren nach einem der vorstehenden Ansprüche,
wobei der ermittelte Ausgabeintensitätswert größer als der Eingabeintensitätswert ist.

6. Verfahren nach einem der vorstehenden Ansprüche,
wobei das Ermitteln des Ausgabeintensitätswerts unter Einbeziehen eines Mindestpulsbreitenwerts und ausgehend von dem zweiten Schwellwert (TH2) erfolgt, wobei der Mindestpulsbreitenwert vorab in einer Kalibrierungsmessung in Abhängigkeit eines kleinsten aus dem in der Kalibrierungsmessung detektierten Echosignal einer Kalibrierungsszene gemessenen Pulsbreitenwerts eines Datenpunkts, dessen Eingabeintensitätswert oberhalb des ersten Schwellwerts (TH1) liegt, definiert wird.

7. Verfahren nach einem der vorstehenden Ansprüche, weiter aufweisend:
falls der Eingabeintensitätswert des mindestens einen Datenpunkts kleiner als der vordefinierte erste Schwellwert (TH1) ist, Bereitstellen des Ausgabeintensitätswerts nur in Abhängigkeit des Eingabeintensitätswerts, insbesondere nach Multiplikation des Eingabeintensitätswerts mit einem Skalierungsfaktor.

8. Verfahren nach einem der vorstehenden Ansprüche,
wobei der Schritt des Überprüfens des Eingabeintensitätswerts des mindestens einen Datenpunkts für mehrere, insbesondere für alle, Datenpunkte des Eingabeintensitätsbildes durchgeführt wird.

9. Verfahren nach einem der vorstehenden Ansprüche,
wobei das Ermitteln des Ausgabeintensitätswerts folgendes umfasst:
Überprüfen ob der Eingabepulsbreitenwert des mindestens einen Datenpunkts kleiner als ein Mindestpulsbreitenwert ist, falls ja, Verwendung des Mindestpulsbreitenwerts als Eingabepulsbreitenwert, falls nein, Überprüfen, ob der Eingabepulsbreitenwert größer als ein maximaler Eingabepulsbreitenwert ist, und falls dies zutrifft Verwenden des maximalen Eingabepulsbreitenwerts als Eingabepulsbreitenwert,
wobei der Mindestpulsbreitenwert vorab in einer Kalibrierungsmessung in Abhängigkeit eines kleinsten aus dem in der Kalibrierungsmessung detektierten Echosignal einer Kalibrierungsszene gemessenen Pulsbreitenwerts eines Datenpunkts, dessen Eingabeintensitätswert oberhalb des ersten Schwellwerts (TH1) liegt, definiert wird,
und wobei der maximale Eingabepulsbreitenwert vorab in der Kalibrierungsmessung in Abhängigkeit eines größten aus dem in der Kalibrierungsmessung detektierten Echosignal einer Kalibrierungsszene gemessenen Pulsbreitenwerts eines Datenpunkts, dessen Eingabeintensitätswert oberhalb des ersten Schwellwerts (TH1) liegt, definiert wird.

10. Verfahren Anspruch 6 oder 9,
wobei der Mindestpulsbreitenwert und/oder der maximale Eingabepulsbreitenwert zusätzlich abhängig von einem dem Datenpunkt zugeordneten Distanzwert, ist/sind.

11. Optischer Laufzeitsensor (10) umfassend
eine Sendeeinheit (11), eine Empfangseinheit (12) und eine Auswerteeinheit (13), die miteinander verbunden sind,
wobei die Sendeeinheit (11) eine Signalquelle, insbesondere eine Lichtquelle, insbesondere eine Laserdiode, umfasst, und zum Aussenden eines Sendesignals (S), insbesondere eines Lichtstrahls in gepulster Form, eingerichtet ist,
wobei die Empfangseinheit (12) ein Empfängerelement umfasst und zur Detektion eines von einer Szene (20) reflektierten Echosignals (S') eingerichtet ist, und
wobei die Auswerteeinheit (13) dazu eingerichtet ist,
aus dem Echosignal ein Eingabeintensitätsbild zu ermitteln, wobei das Eingabeintensitätsbild mehrere Datenpunkte, aufweist, denen jeweils zumindest ein Eingabeintensitätswert und ein Eingabepulsbreitenwert zugeordnet ist, wobei der Eingabeintensitätswert und der Eingabepulsbreitenwert jeweils aus dem detektierten Echosignals bestimmt ist,
für mindestens einen Datenpunkt des Eingabeintensitätsbildes zu überprüfen, ob sein Eingabeintensitätswert einen vordefinierten ersten Schwellwert (TH1) erreicht oder übersteigt, falls ja, für den mindestens einen Datenpunkt einen Ausgabeintensitätswert zu ermitteln, wobei der Ausgabeintensitätswert eine Funktion des Eingabeintensitätswerts und des Eingabepulsbreitenwerts ist oder wobei der Ausgabeintensitätswert eine Funktion nur des Eingabepulsbreitenwerts ist, und
ein Ausgabeintensitätsbild mit dem mindestens einen Datenpunkt mit dem Ausgabeintensitätswert bereitzustellen,
wobei die Auswerteeinheit (13) weiter dazu eingerichtet ist, beim Ermitteln des Ausgabeintensitätswerts für den mindestens einen Datenpunkt zusätzlich einen Vergleich des Eingabeintensitätswerts des mindestens einen Datenpunkts mit einem vordefinierten zweiten Schwellwert (TH2), welcher größer als der erste vordefinierte Schwellwert (TH1) ist, durchzuführen, und falls der Eingabeintensitätswert größer als der zweite Schwellwert (TH2) ist, das Ermitteln des Ausgabeintensitätswerts nur als Funktion der Eingabepulsbreite des mindestens einen Datenpunkts durchzuführen, wobei der zweite Schwellwert (TH2) so festgelegt ist, dass er an einen maximal messbaren Eingabeintensitätswert angepasst ist oder nur wenig unter diesem liegt.

12. Optischer Laufzeitsensor (10) nach dem vorstehenden Anspruch, wobei das Empfängerelement eine Vielzahl lichtsensitiver Elemente umfasst, die jeweils eine Fotodiode, insbesondere eine Lawinenfotodiode, aufweisen, wobei jeweils mindestens zwei lichtsensitiver Elemente aus der Vielzahl lichtsensitiver Elemente einem Datenpunkt des Eingabeintensitätsbildes zugeordnet sind, und wobei der Eingabeintensitätswert und der Eingabepulsbreitenwert eines jeweiligen Datenpunkts jeweils aus Signalen ermittelt werden, welche von den mindestens zwei dem jeweiligen Datenpunkt zugeordneten lichtsensitiven Elementen aufgrund der Detektion des Echosignals bereitgestellt sind.

13. Optischer Laufzeitsensor (10) nach Anspruch 11 oder 12,
wobei der optische Laufzeitsensor als Light Detection and Ranging, LiDAR, Sensor, insbesondere als dreidimensionaler LiDAR Sensor realisiert ist.

14. Computerprogrammprodukt, das ein computerlesbares Speichermedium umfasst, auf welchem ein Programm gespeichert ist, das es einem Computer ermöglicht, nach Einlesen des Programms in einen Speicher des Computers das Verfahren gemäß einem der Ansprüche 1 bis 10 insbesondere im Zusammenwirken mit dem optischen Laufzeitsensor gemäß einem der Ansprüche 11 bis 13 auszuführen.
